# EUROPÄISCHE PATENTSCHRIFT

(11) **EP 0 407 652 B1**
(45) Veröffentlichungstag und Bekanntmachung des Hinweises auf die Patenterteilung: **26.10.1994**
(21) Anmeldenummer: 89117674.5
(22) Anmeldetag: 25.09.1989
(51) Int. Cl.: E04F 17/08

(54) **Aufbauwand mit Entnahmeeinrichtungen für die Intensivmedizin**
Mounting wall with bleeding devices for intensive medical care
Mur gainé technique comportant des raccords pour la médecine intensive

(30) Priorität: 10.07.1989 DE 3922634
(43) Veröffentlichungstag der Anmeldung: 16.01.1991
(73) Patentinhaber: THORN LICHT GmbH, D-59755 Arnsberg (DE)
(72) Erfinder: Grimm, Manfred, D-5760 Arnsberg 1 (DE)
(74) Vertreter: Fritz, Edmund Lothar, Dipl.-Chem.

(56) Entgegenhaltungen:
- EP-A- 0 057 169
- FR-A- 2 571 768
- GB-A- 1 232 515

## Beschreibung

Die vorliegende Erfindung betrifft eine Aufbauwand mit Entnahmeeinrichtungen für die Intensivmedizin mit nachfolgend genannten Bauelementen:
- einem Sockel, der an einer Raumwand hinter einem Krankenbett aufstellbar ist und einen mittleren Abschnitt besitzt, dessen Länge etwa der Breite eines Bettes entspricht sowie am Bett überstehende seitliche Abschnitte,
- mit einem auf jedem seitlichen Abschnitt aufgestellten Kanalelement, das einen zur Raumwand hin offenen Installationsraum umschließt und an dessen Vorderseite fabrikatorisch Entnahmeelemente für die Intensivmedizin angebracht sind,
- mit jeweils den Entnahmeelementen zugeordneten Installationskästen, die an jeweils einem Querträger befestigt sind, der seinerseits an zwei in einem Installationsraum lotrecht aufgestellten Trägern gehalten ist,
- mit in einem Abstand, der die Aufnahme von Leitungen zuläßt, an der Raumwand befestigten Verkleidungsplatten, und zwar einer mittleren Verkleidungsplatte zwischen den beiden Kanalelementen und zwei seitlichen Verkleidungsplatten seitlich neben den Kanalelementen,
wobei die Kanalelemente mit den Verkleidungsplatten lösbar verbunden sind und wobei zur Abdeckung des Raumes zwischen den lotrechten Bauelementen und der Gebäudedecke eine obere Verkleidung vorgesehen ist.

Ein solche Aufbauwand mit Entnahmeeinrichtungen für die Intensivmedizin ist aus der GB-A-1 232 515 bekannt geworden. Bei dieser vorbekannten Aufbauwand sind die Querträger in ihrer Anordnung an den lotrecht aufgestellten Trägern in Bezug auf die Höhe festgelegt, da an den lotrechten Trägern Bohrungen für die Befestigung der Querträger mit Schrauben vorgesehen sind. Bei der vorbekannten Installationswand wird nach Anwendung der lotrechten Träger und der an den Querträgern befestigten Installationskästen der offene Raum zwischen Querträgern und lotrechten Trägern durch paneelartige Verkleidungsplatten verkleidet, die auf geeignete Größe zugeschnitten und eingefügt werden müssen. Dies bedingt einen relativ hohen Montageaufwand.

Die Aufgabe der vorliegenden Erfindung besteht demgegenüber, eine Aufbauwand mit Entnahmeeinrichtungen für die Intensivmedizin der eingangs genannten Art zu schaffen, die mit möglichst geringem Montageaufwand in einem Krankenzimmer, das noch keine Entnahmeeinrichtungen für die Intensivmedizin hat, installiert werden kann, wobei eine beliebige Höhenverstellung der Querträger mit den Installationskästen möglich ist.

Die Lösung dieser Aufgabe liefert eine erfindungsgemäße Aufbauwand mit Entnahmeeinrichtungen für die Intensivmedizin der eingangs genannten Art mit den kennzeichnenden Merkmalen des Anspruchs 1.

Eine solche Aufbauwand besteht aus Standardelementen der Möbelherstellung und kann in einem Krankenzimmer, wo in der Gebäudewand hinter den Betten bereits Leitungen verlegt sind, in wenigen Stunden montiert werden, ohne daß Maurerarbeiten und nachträgliche Tüncherarbeiten erforderlich sind. Dabei sind die Installationselemente wie sie für die Intensivmedizin erforderlich sind, bereits fabrikatorisch vormontiert. Im übrigen ist auch eine Anpassung dieser Elemente an die örtlichen Verhältnisse möglich. Man könnte z. B. die Installationskästen in der Aufbauwand höhenmäßig so einstellen, daß die von der Raumwand ausgehenden Zuleitungen möglichst kurz sind. Die zur Aufbauwand gehörenden Verkleidungsplatten werden mit einem solchen Abstand an die Raumwand gesetzt, daß dazwischen Leitungen verlegt werden können.

Gemäß der weiteren Ausgestaltung der Erfindung können an der Aufbauwand auch Elemente für die Raumbeleuchtung und die Bettbeleuchtung vorgesehen sein.

Die Kanalprofile sind durch Verbindung mit den Verkleidungsplatten gehalten. Die Verbindung ist lösbar, z. B. eine Rastverbindung, damit die Kanalprofile für die Wartung der Installation abgenommen werden können. In vereinfachter Weise kann die Aufbauwand anstatt zwei Kanalprofile nur ein einziges Profil haben.

Im folgenden wird ein Ausführungsbeipiel der Erfindung näher beschrieben, unter Bezugnahme auf die beiliegenden Zeichnungen.
- Fig. 1: ist eine Ansicht einer Aufbauwand nach der Erfindung;
- Fig. 2: zeigt im Prinzip einen Schnitt nach II-II von Fig. 1;
- Fig.3: ist in vergrößertem Maßstab mit weiteren Einzelheiten ein lotrechter Schnitt nach III-III von Fig. 2;
- Fig. 4: zeigt in einem noch größeren Maßstab einen Horizontalschnitt durch einen Installationsraum gemäß IV-IV von Fig. 3.

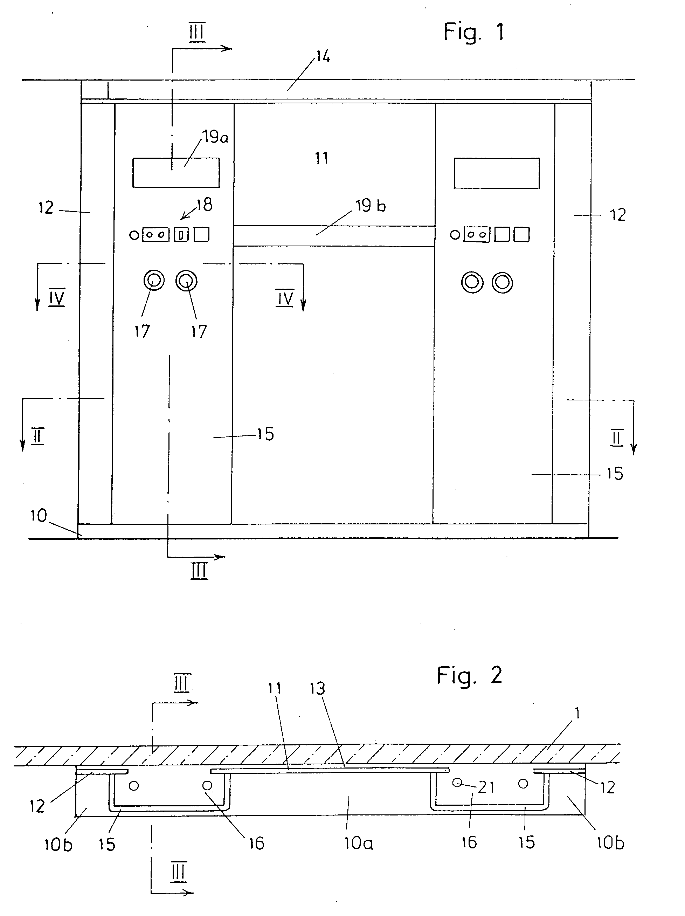

Zunächst wird auf Fig. 1 und 2 Bezug genommen. Die Aufbauwand wird unmittelbar an einer Raumwand 1 hinter einem Krankenbett aufgestellt, eine Montagearbeit, die mit herkömmlichen Mitteln von Schreinern ausgeführt werden kann. Die Einzelteile der Aufbauwand sind handelsübliche Elemente des Innenausbaus, so weit wie möglich vorgefertigt. Sie bestehen aus den bekannten Baustoffen der Möbelproduktion.

Die Aufbauwand ruht auf einem Sockel 10, der bodenseitig aufgesetzt wird, wobei er an der Raumwand anliegt. Er wird in handwerklicher Weise (Schrauben, Dübel) befestigt. Seine Länge erstreckt sich über einen Mittelabschnitt 10a von einer Länge entsprechend der Breite des Krankenbettes. Daran schließen sich zwei etwas kürzere Seitenabschnitte 10b an, die seitlich gegenüber dem Krankenbett vorstehen.

Auf diese Seitenabschnitte sind Bauelemente 15 mit Rechteckquerschnitt aufgesetzt. Sie umschließen einen Installationsraum 16, der zur Raumwand 1 hin offen ist, so daß die Möglichkeit besteht, Elektroleitungen und Gasleitungen von der Raumwand in den Installationsraum der Aufbauwand zu führen. An der Vorderseite des Kanalelementes 15 sind bereits fabrikatorisch Entnahmeelemente für die Intensivmedizin angebracht und zwar zwei Steckdosen 17 für Gas und darüber Bedienungelemente 18 der elektrischen Einrichtungen wie Steckdosen, Schalter für Nachrichtenübermittlung, Starkstrom, Schwachstrom usw. Darüber ist auch eine Leuchte 19a für die Raumbeleuchtung eingebaut.

Zwischen den Kanalelementen 15 ist die Raumwand 1 durch eine Platte 11 verkleidet. Sie ist mit den üblichen Mitteln (Dübel, Schrauben) fest mit der Raumwand 1 verbunden, wobei jedoch mit Hilfe von Abstandshaltern ein Raum 13 freigelassen ist, der ausreicht, um Leitungen aufzunehmen. Auch an beiden Seiten sind entsprechende Verkleidungsplatten 12 vorgesehen und in gleicher Weise befestigt.

Den Entnahmeeinrichtungen für Gas und Strom bzw. für die Nachrichtenaufnahme an der Vorderseite des Kanalelementes 15 sind entsprechende Installationskästen 23 zugeordnet. Sie befinden sich im Installationsraum 16 und sind jeweils an Querträgern 22 befestigt, die ihrerseits an zwei lotrecht aufgestellten Rohren 21 höhenverstellbar gehalten sind. Jedes Rohr wird mit seinem unteren Ende von einer Büchse 20 aufgenommen mit einer Scheibe, die auf dem Sockel fest angebracht ist. Oben wird jedes Rohr von einer Halterung 24 gehalten, die eine feste Verbindung mit der Raumwand 1 herstellt.

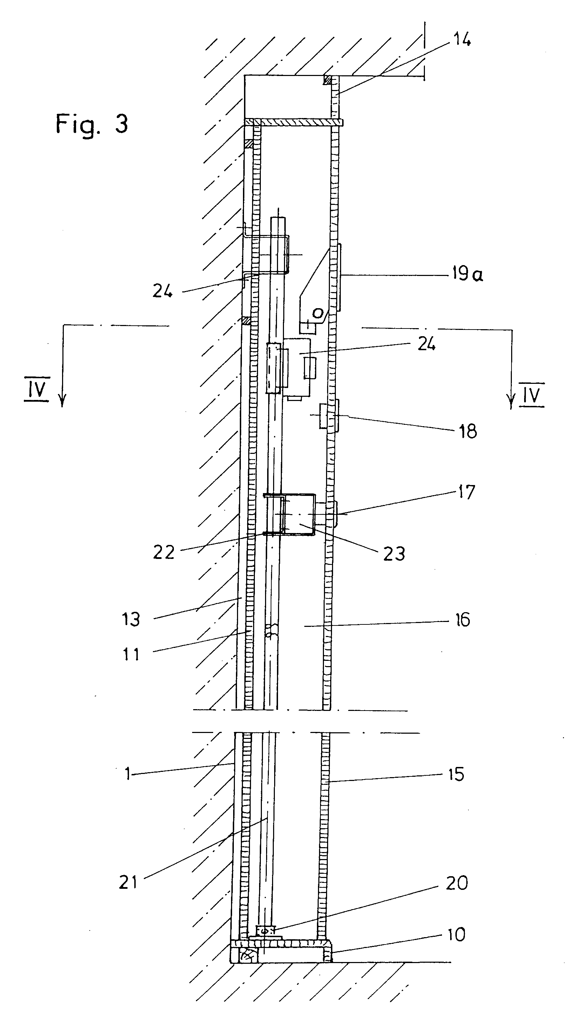

Der Zwischenraum zwischen den Verkleidungsplatten und den Kanalprofilen 15 einerseits und der Gebäudedecke andererseits wird durch ein Verkleidungselement 14, das gemäß Fig. 3 den Querschnitt eines Winkels haben kann, ausgefüllt. In handwerklicher Weise wird dieses Element bei der Montage zugeschnitten und befestigt.

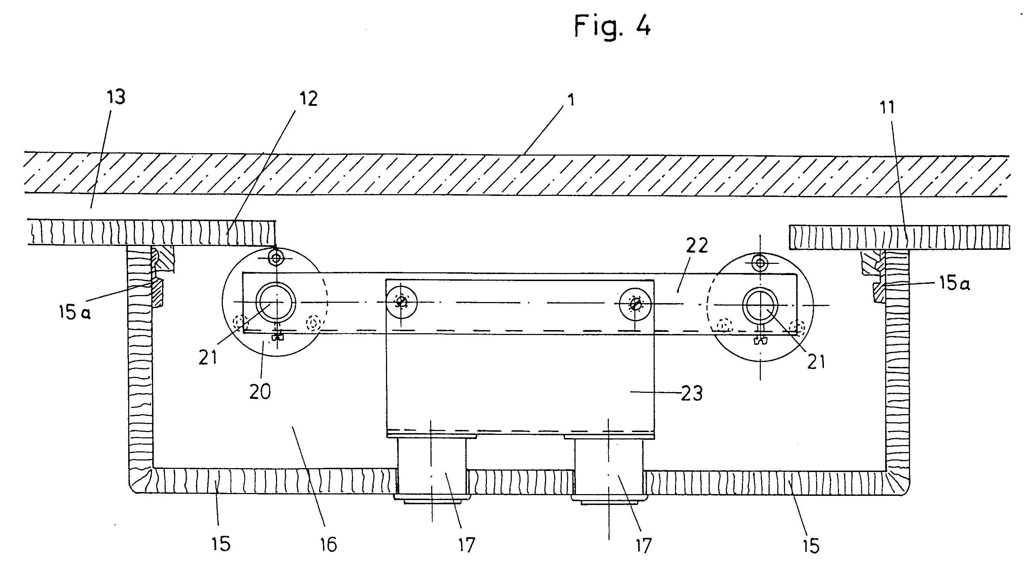

Wie man aus Fig. 4 erkennt, sind die Kanalelemente 15 durch Verbindungselemente mit den Verkleidungsplatten 11 und 12 gehalten. Diese Verbindungsmittel sind lösbar, im vorliegenden Fall als Rastelemente 15a. Es besteht somit die Möglichkeit, jedes Kanalelement 15 abzunehmen, so daß der Installationsraum für die Wartung frei gemacht werden kann.

## Patentansprüche

1. Aufbauwand mit Entnahmeeinrichtungen für die Intensivmedizin mit nachfolgend genannten Bauelementen:
- einem Sockel (10), der an einer Raumwand hinter einem Krankenbett aufstellbar ist und einen mittleren Abschnitt (10a) besitzt, dessen Länge etwa der Breite eines Bettes entspricht sowie am Bett überstehende seitliche Abschnitte (10b);
- mit einem auf jedem seitlichen Abschnitt (10b) aufgestellten Kanalelement (15), das einen zur Raumwand hin offenen Installationsraum (16) umschließt und an dessen Vorderseite fabrikatorisch Entnahmeelemente (17, 18) für die Intensivmedizin angebracht sind;
- mit jeweils den Entnahmeelementen (17, 18) zugeordneten Installationskästen (23, 24), die an jeweils einem Querträger (22) befestigt sind, der seinerseits an zwei in einem Installationsraum (16) lotrecht aufgestellten Trägern gehalten ist;
- mit in einem Abstand, der die Aufnahme von Leitungen zuläßt, an der Raumwand befestigten Verkleidungsplatten, und zwar einer mittleren Verkleidungsplatte (11) zwischen den beiden Kanalelementen (15) und zwei seitlichen Verkleidungsplatten (12) seitlich neben den Kanalelementen (15),
wobei die Kanalelemente (15) mit den Verkleidungsplatten (11, 12) lösbar verbunden sind und wobei zur Abdeckung des Raumes zwischen den lotrechten Bauelementen und der Gebäudedecke eine obere Verkleidung (14) vorgesehen ist,
dadurch gekennzeichnet, daß die im Installationsraum lotrecht aufgestellten Träger Rohre (21) sind, die jeweils mit ihrem unteren Ende von einer Büchse (20) aufgenommen sind, die auf dem Sockel (10) fest angebracht ist, wobei jedes Rohr oben von einer Halterung (24) gehalten ist, die eine feste Verbindung mit der Raumwand (1) herstellt,
daß die Querträger (22) für die den Entnahmeelementen zugeordneten Installationskästen (23, 24) jeweils an zwei Rohren (21) höhenverstellbar gehalten sind,
und daß die Kanalelemente (15) einen rückseitig offenen U-Querschnitt aufweisen und die seitlich neben den Kanalelementen angeordneten Verkleidungsplatten (12) und die mittlere Verkleidungsplatte (11), die zwischen den Kanalelementen (15) liegt, hinter den Kanalelementen in der Ebene des der Raumwand (1) zugewandten Endes der Kanalelemente (15) liegen.

2. Aufbauwand nach Anspruch 1, dadurch gekennzeichnet, daß an der Vorderseite des Kanalprofils (15) eine Leuchte (19a) für die Raumbeleuchtung installiert ist.

3. Aufbauwand nach Anspruch 1, dadurch gekennzeichnet, daß an der mittleren Verkleidungsplatte (11) eine Leuchte (19b) für die Bettbeleuchtung installiert ist.

## Claims

1. Mounting wall with bleeding devices for intensive medical care having the following constructional elements:
- a stationary base (10) which can be installed at a wall of a room behind a sick-bed and which has a central part (10a) the length of which corresponds approximately to the width of a bed, as well as lateral parts (10b) projecting at the bed;
- a channel element (15) erected on each lateral part (10b) which encloses an installation space (16) open towards the wall of the room and at the front side of which bleeding elements (17, 18) for intensive medical care are provided ex factory;
- installation boxes (23, 24) associated with each of the bleeding elements (17, 18) which are in each case fastened to a crossarm (22) which, on its side, is supported by two beams vertically positioned in an installation space (16);
- covering plates mounted at the wall of the room at a distance allowing the installation of lines, namely a central covering plate (11) between the two channel elements (15) and two lateral covering plates (12) laterally besides the channel elements (15),
the channel elements (15) being detachably connected to the covering plates (11, 12),
and for covering the space between the vertical constructional elements and the ceiling of the building an upper cover (14) being provided,
characterised in that the beams vertically installed in the installation space are pipes (21) which are accommodated with their lower ends in a sleeve (20) stationarily mounted on the base (10), each pipe being supported at its top by a holding (24) establishing a firm connection with the wall (1) of the room;
that the crossarms (22) for the installation boxes (23, 24) associated with the bleeding elements are each mounted at two pipes (21) in a manner so as to be adjustable in height,
and that the channel elements (15) comprise a U-shaped cross section open towards the back side and the covering plates (12) positioned laterally besides the channel elements and the central covering plate (11) positioned between the channel elements are positioned behind the channel elements in the plane of that end of the channel elements (15) facing the wall (1) of the room.

2. Mounting wall as claimed in claim 1, characterised in that at the front side of the channel section (15) a lamp (19a) for the illumination of the room is installed.

3. Mounting wall as claimed in claim 1, characterised in that at the central covering plate (11) a lamp (19b) for the illumination of the bed is installed.

## Revendications

1. Mur gainé technique comportant des raccords pour la médecine intensive avec des éléments de construction suivants :
- un soubassement (10) qui peut être monté au mur d'une pièce derrière un lit de malade et qui comprends une partie du milieu (10a) la longueur de laquelle étant conforme environ à la largeur d'un lit et des parties latérales (10b) saillissent du lit;
- un élément en forme d'un canal (15) installé sur chaque partie latérale (10b) qui enferme un espace d'installation (16) ouvert vers le mur de la pièce, au front de cet élément des éléments de raccord (17, 18) pour la médecine intensive étant installés par l'usine;
- des boîtes d'installation (23, 24) associées avec les éléments de raccord (17, 18) qui sont fixées à une traverse (22) qui est supportée, de sa part, par deux poutres placées verticalement dans un espace d'installation (16);
- des plaques de revêtement fixées au mur de la pièce à une distance permettant l'installation des conduites, à savoir une plaque de revêtement du milieu (11) entre les deux éléments en forme d'un canal (15) et deux plaques de revêtement latérales (12) situées à côté des éléments en forme d'un canal (15),
les éléments en forme d'un canal (15) étant raccordés avec les plaques de revêtement (11, 12) en manière détachable
et pour le recouvrement d'espace entre les éléments de construction verticals et le plafond du bâtiment un revêtement supérieur (14) étant prévu,
caractérisé en ce que les poutres placées verticalement dans l'espace d'installation sont des tuyaux (21) qui sont réçus à leur bout inférieur par une douille fixée sur le soubassement (10), chaque tuyau étant arrêté en haut par un point d'attache (24) qui établit un assemblage fixe avec le mur (1) de la pièce,
que les traverses (22) pour les boîtes d'installation (23, 24) associées avec les éléments de raccord sont tenues à deux tuyaux (21) en manière d'être réglable en hauteur,
et que les éléments en forme d'un canal (15) comprennent un section en U ouvert au fond et que les plaques de revêtement (12) situées à côté des éléments en forme d'un canal et la plaque de revêtement du milieu (11) située entre les éléments en forme d'un canal (15) sont placées derrière les éléments en forme d'un canal dans le plan du bout des éléments en forme d'un canal tourné vers le mur (1) de la pièce.

2. Mur gainé technique selon la revendication 1, caractérisé en ce qu'une lampe (19a) pour l'éclairage de la pièce est installée à la face du profil en forme d'un canal (15).

3. Mur gainé technique selon la revendication 1, caractérisé en ce qu'une lampe (19b) pour l'éclairage du lit est installée à la plaque de revêtement du milieu (11).
